(19) **Europäisches Patentamt**
**European Patent Office**
**Office européen des brevets**

(11) **EP 1 510 804 B1**

(12) **EUROPEAN PATENT SPECIFICATION**

(45) Date of publication and mention
of the grant of the patent:
**28.03.2007 Bulletin 2007/13**

(51) Int Cl.:
***G01M 3/02*** *(2006.01)*          ***G01M 3/32*** *(2006.01)*

(21) Application number: **03077722.1**

(22) Date of filing: **28.08.2003**

(54) **Method and apparatus for leakage diagnosis in a vessel**

Verfahren und Vorrichtung zur Leckdiagnose in einem Behälter

Procédé et dispositif de détection de fuite dans un réservoir

(84) Designated Contracting States:
**DE GB SE**

(43) Date of publication of application:
**02.03.2005 Bulletin 2005/09**

(73) Proprietor: **Ford Global Technologies, LLC**
**Dearborn, MI 48126 (US)**

(72) Inventors:
• **Lingenhult, Anders**
**414 70 Göteborg (SE)**

• **Sandberg, Erik**
**413 17 Göteborg (SE)**

(74) Representative: **Mossmark, Anders Lennart**
**Albihns Göteborg AB**
**Box 142**
**401 22 Göteborg (SE)**

(56) References cited:
**US-A1- 2002 157 456**     **US-A1- 2002 157 653**

**Description**

TECHNICAL FIELD

The invention relates to a method for diagnosing a leakage in a vessel, such as a fuel tank, by means of an evaluation algorithm independent of the liquid level in the vessel.

BACKGROUND ART

In order to minimise emissions various from vehicles, it is desirable to perform tests or diagnoses on vessels or tanks contained in or on the vehicle. In the case of a fuel tank containing petrol or diesel, emissions of hydrocarbon vapours must be detectable. A leakage in a fuel tank or fuel line, or a malfunction in any of its related components have to illuminate a Malfunction Indication Lamp (MIL) .

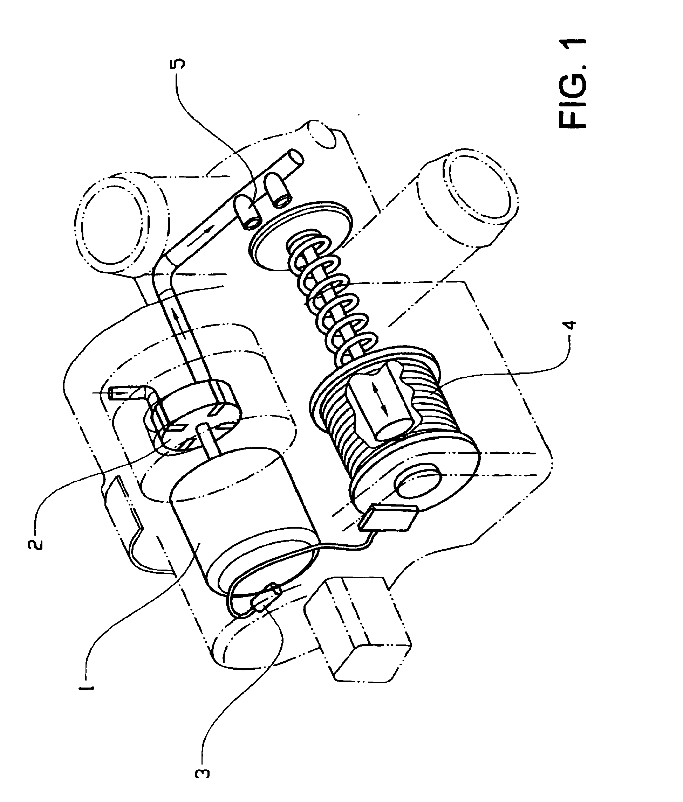

Figure 1 shows one possible arrangement for diagnosing a leakage in a tank, such as a fuel tank. The current (I) through an electric motor 1 in a pump 2 is measured by a sensor 3, which drive current correlates to the power (P) consumed by the pump. As the power is a function of the pressure difference over the pump, the drive current correlates to the absolute pressure in a tank.

$$(1) \qquad UI = P \propto p_{tank} - p_{atm},$$

where U is the voltage, $p_{tank}$ is the tank pressure and $p_{atm}$ the atmospheric pressure. The pump module described in this example has three controlled parts, which are a pump 2, a valve 4 and an electric heater (not shown). The heater is used for heating the module during a predetermined period of time before the diagnostic test, in order to remove condensation and/or ice

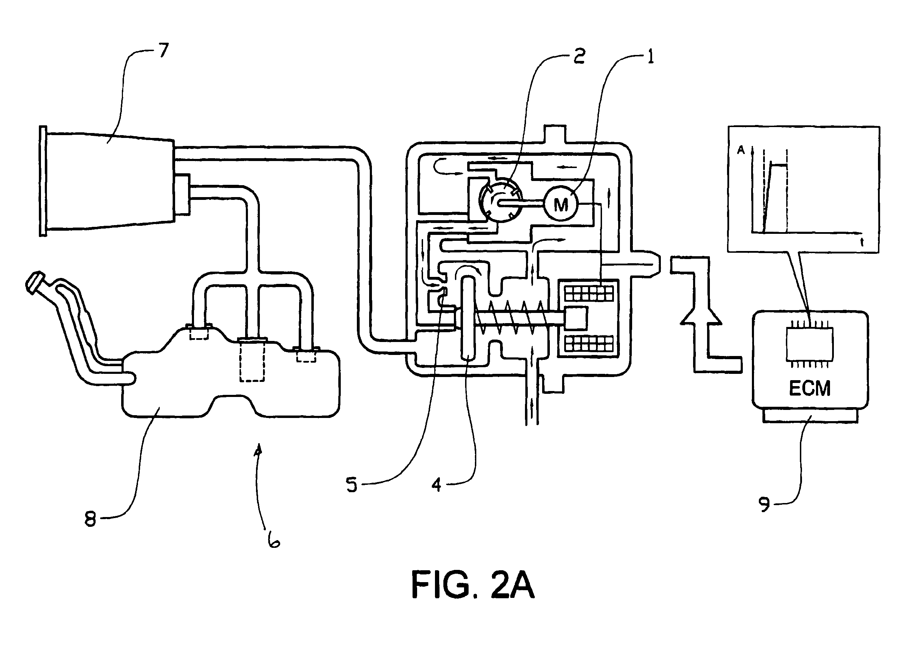

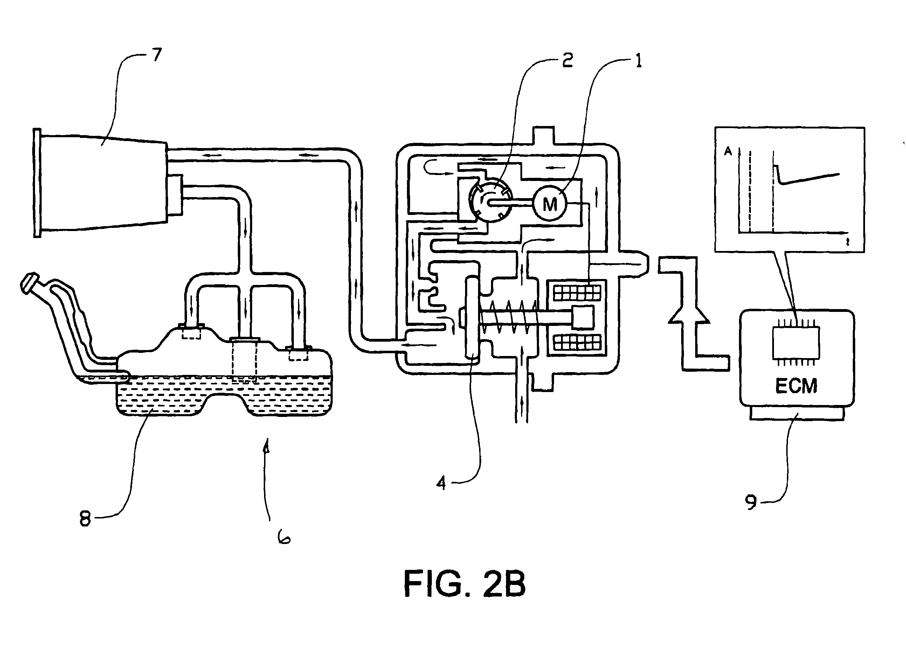

The valve 4 has two different positions. In a first position air flows from the pump 2 through a reference hole 5 (Fig. 2A). In a second position air flows from the pump 1 into a tank system 6 (Fig. 2B), including a canister 7 and a fuel tank 8. A suitable valve for this purpose can be a change over valve (COV) such as Bosch © DM-TL. The valve itself is not part of the invention and will not be described in exact detail.

First the pump forces the pressurised air through a reference hole, which in this example has been selected to have 0,5 mm diameter. The current used by the motor to maintain a reference pressure, equal to the tank pressure, is termed reference current $I_{ref}$. When the air flow and the current to the pump has stabilised, a reference current is sampled by an electronic control unit 9. Subsequently the change over valve (COV) is switched so that the air is instead pumped into the tank. During the first seconds after the COV switching the pump, or drive current has a minimum, due to the relatively low pressure difference between atmospheric pressure and the tank pressure.

To determine whether the tank has a leakage equivalent to or larger than a hole having a 0,5 mm diameter, the reference drive current, an evaporative factor, a liquid level signal and the time taken to reach the reference current level are used. The evaporative factor is input from a purge control function.

A moving average of a derivative of the drive current over time is calculated during the pressure increase. If this derivative is smaller than a value based on fuel level and the evaporative factor the tank is judged as faulty (leakage). The tank is judged as normal (non-leakage) when the drive current reaches the reference current level or a percentage above this level. For the leakage equivalent or larger than 1,0 mm a current level is calculated based on the reference and the minimum current, fuel level, atmospheric pressure and an evaporative factor. This current level is the fault limit and if the maximum admitted time for the drive current to reach the fault limit is passed then the tank is judged as faulty. The maximum admitted time is based on atmospheric pressure and fuel level.

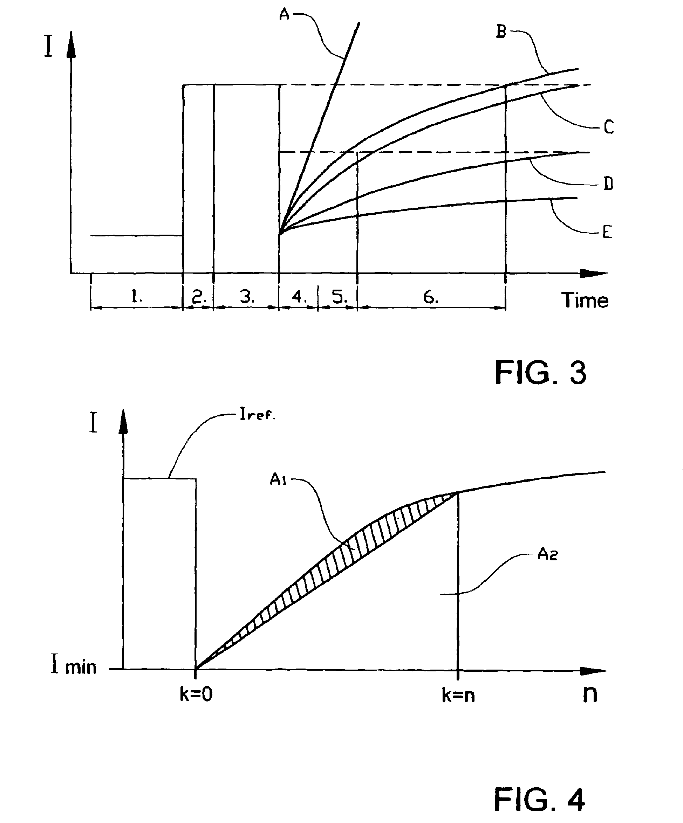

Figure 3 describes a basic sequence used for the leakage diagnosis function, as used for an arrangement as described in connection with Figure 1 and 2. The numbers in the figure corresponds to different states in the sequence.

State 1 is a time delay after ignition off. This is to make sure that the diagnosis function is performed under static running conditions. If the pump is switched off for stage 1, the initial drive current $I_{min}$ is considered to be zero.

In state 2 the pump has been switched on to perform a reference measurement using a reference leak for a 0,5 mm reference orifice. This state is mainly a delay to wait for an initial transient to die out. State 3 is a continued waiting for a stabilised reference current $I_{ref}$. When the transient has died out and the drive current signal is sufficiently stable, a reference current $I_{ref}$ for the reference leak is sampled and stored in the electronic control unit 9. In state 4 the change over valve is switched to allow the pump to pressurise the tank. An initial time delay is defined to let transients, due to switching, disappear. During state 5 the diagnosis waits for the filtered current signal to pass a first current level $I_1$, which corresponds to a leak of 1.0 mm in diameter. If the conditions are fulfilled to perform a small leak test the sequence proceed into state 6. Here the diagnostic function examine if the derive of the drive current is large enough and if the drive current passes the reference current level.
Document US A 2002/0157456 is disclosing a similar apparatus and method.

**Table 1**.Leakage diagnosis using the curves of Figure 3.

| Curve | Explanation |
|-------|-------------|
| A | No leakage at all. |
| B | Probably no leakage. The time of increase the pressure takes longer time than A, probably due to smaller amount fuel in the tank. |
| C | The current asymptotely approaches the reference value for a 0,5 mm leakage. |
| D | The current asymptotely approaches the reference value for a 1,0 mm leakage. |
| E | The current stabilises and will never reach the reference value for a 1 mm leakage. Probably large leakage. |

However, according to recent legislation it will not be allowable to use the fuel level signal in leakage diagnosis without considering the fuel level sensor as an Emission Related Component (ERC). All emission related components have to illuminate Malfunction Indication Lamp (MIL) in case of malfunction, which implicates the emissions. This would require an individual component diagnosis for the fuel level sensor, which would be expensive and add to the complexity of the system.
One solution of this problem is to make the leakage diagnosis independent of the fuel level sensor signal, while using the hardware and other sensors already provided. According to the invention an improved evaluating algorithm is provided that does not require the fuel level signal as an input.

DISCLOSURE OF INVENTION

The above problems are solved by a method according to claim 1, an apparatus according to claim 10 and the respective dependent claims.
The invention presents an improved evaluation algorithm in order to decide whether there is a leakage in a vessel, container, tank system or similar. The method uses information about a measured current in an electric pump unit connected to the vessel to detect a leakage in the tank system. The method is based on an actual over pressure leakage diagnosis method.
In the following text the terms "vessel" and "tank" are considered to be synonymous. The described examples are directed to a leakage of air or vapour to the atmosphere, but the invention may encompass the leakage of any gas or vapour from a closed vessel into a volume surrounding said vessel.
According to one embodiment of the invention, the method can be effected using substantially the same hardware as described in the above example. The pump is originally designed to be used by the diagnosis system in order to detect whether a tank system has a leakage between tank system and air. The method according to the invention uses the same basic steps of making a reference measurement before performing an actual measurement, as will be described in further detail below. The present algorithm is subsequently executed during a pressurisation of a tank system.
According to an embodiment, the invention involves a method for diagnosing a leakage in a vessel, which vessel is provided with an electric pump for pressurising the vessel, a sensor for measuring a drive current used for driving the pump and generating a current signal, an electronic control unit for sampling, storing and analysing said drive current signal. The method may involve at least the steps of:

- measuring a reference drive current for a known operating condition,
- pressurising the vessel and sampling the drive current until at least one predetermined condition is fulfilled,
- determining an area ratio based on the integrated values of actual drive current used in excess of an ideal drive and the ideal drive current over an initial and a current sample, and
- comparing at least the area ratio as a function of a further parameter with a reference level, when at least one predetermined condition is fulfilled, to determine if a leakage is present.

When calculating the area ratio, the area for the actual drive current are integrated values of actual drive current over the range of samples, while the ideal drive current uses only the first and last samples of that range.
According to a further embodiment, the invention involves a method for diagnosing a leakage in a vessel, which vessel is provided with an electric pump for pressurising the vessel, a sensor for measuring a drive current used for driving the pump and generating a current signal, an electronic control unit for sampling, storing and analysing said drive current signal. The method may involve at least the steps of:

- measuring a reference drive current of the electric pump when air is pumped by said electric pump via a reference orifice having a reference aperture diameter, and
- diagnosing the presence of a vapour leakage by sampling the initial and subsequent values for the drive current of said electric pump for when air is pumped by said electric pump bypassing said reference orifice and into the vessel to be leak diagnosed;
- calculating a relative drive current, using the sampled drive current, the reference drive current and the initial drive current;
- calculating an area ratio, as a ratio of the difference between an integrated value of the relative drive current and an integrated value of an ideal drive current using the initial and the current drive current samples, over said integrated value of an ideal drive current;
- comparing at least the area ratio with a reference level when at least one predetermined condition is fulfilled, to determine if a leakage is present.

The above calculations are performed continuously during the diagnostic test each time a current value is sampled. Said predetermined condition may be deemed to be fulfilled when a plotted function of the area ratio over relative drive current reaches a predetermined boundary limit, when the area ratio exceeds a pre-set value, or when a pre-set time period is exceeded.

The area ratio and the relative drive current used in the method above are both non-dimensional variables. For instance, the relative drive current is calculated as a ratio of the difference between the sampled drive current and the initial drive current over the difference between the reference drive current and the initial drive current.

Calculation of the area ratio requires a continuous accumulation of values for the actual drive current for the pump until a predetermined condition is fulfilled. The values for drive current are integrated to calculate an actual area using all the accumulated values, including the current value of said current. A further calculation determines an ideal accumulated area, which is an orthogonal triangle for the values of a first or initial drive current and the current drive current for the first and last sample respectively. A current area ratio is may then be calculated as a ratio of the difference between the integrated values of the relative drive current area and the ideal area over the ideal area. This area ratio or a function thereof can then be compared with the relative drive current, its derivative or some other related function, as described below. The calculated values of area ratio are non-dimensional, making them independent of time and thus independent of the liquid level in said tank or container.

In order to further improve the accuracy of the leakage diagnosis a suitable function of the area ratio can be compared with a map stored in the electronic control unit to determine if a leakage is present. Examples of such suitable functions can be a plotting or mapping of the area ratio as a function of relative drive current, a derivative of the area ratio as a function of relative drive current, the area ratio as a function of the ideal area, or a derivative of the area ratio as a function of the area ratio. The results of at least the last calculations performed during the previous diagnostic test can then be stored and compared with a map stored in the electronic control unit to determine if a leakage is present. It is of course possible to store all maps or plotted diagrams resulting from a leakage diagnosis, but this may not always be desirable due to the often limited memory capacity in this type of control unit.

First a reference test is made on the pump by using an available reference orifice having a known diameter located in the pump module. Then a valve is switched to bypass the orifice and the pump starts to pressurise the vessel in order to run a leakage diagnosis. When one or more conditions have been fulfilled the diagnosis algorithm determines whether there is no leakage, small or rough leakage.

The leakage diagnosis is normally executed during an engine off condition. The diagnosis can, if so desired, be used during an engine on condition, but in this state the drive current signal tends to contain more noise.

The invention also relates to a leakage diagnosis apparatus for determining a leakage in a vessel, which vessel is provided with an electric pump for pressurising the vessel, a sensor for measuring a drive current used for driving the pump and generating a current signal, an electronic control unit for sampling, storing and analysing said drive current signal, The apparatus further comprises:

- means for measuring a reference drive current of the electric pump when air is pumped by said electric pump via a reference orifice having a reference aperture diameter, and
- means for diagnosing the presence of a vapour leakage by sampling the initial and subsequent values for the drive current of said electric pump for when air is pumped by said electric pump bypassing said reference orifice and into the vessel to be leak diagnosed;
- means for calculating a relative drive current, using the sampled drive current, the reference drive current and the initial drive current;

- means for calculating an area ratio, as a ratio of the difference between an integrated value of the relative drive current for a predetermined number of samples and an integrated value of an ideal drive current using the initial and current drive current samples, over said integrated value of an ideal drive current;
- means for comparing at least the area ratio with a reference level when at least one predetermined condition is fulfilled, to determine if a leakage is present.

BRIEF DESCRIPTION OF DRAWINGS

The embodiments specified in the description will be described with reference to drawings attached, in which:

Fig. 1      Figure 1 illustrates a possible pump module for use in the method according to the invention.;
Fig. 2A     shows a schematic layout of a tank arrangement during a reference measurement;
Fig. 2B     shows a schematic layout of a tank arrangement during a diagnosis;
Fig. 3      shows a sequence description for a diagnosis function;
Fig. 4      shows a diagram illustrating the areas used for evaluation;
Fig. 5      shows a diagram illustrating area ratio vs. relative drive current;
Fig. 6      shows a diagram illustrating area ratio vs. ideal area;
Fig. 7      shows a diagram illustrating relative drive current vs. area ratio derivative;
Fig. 8      shows a diagram illustrating area ratio derivative vs. area ratio;
Fig. 9      shows a histogram for the test value calculated from Figure 8;
Fig. 10     shows the fuel level independence of the evaluation algorithm.

The figures are only schematic drawings and the invention is not limited to these embodiments.

MODES FOR CARRYING OUT THE INVENTION

The invention uses the assumption that the pressure increase curves differently as function of leakage size. This assumption proves to be true analysing a large number of measurements for different environmental conditions and liquid levels in the tank. The proposed evaluation algorithm is used during state 5 and 6 shown in Figure 3 above. Basically the same logic as described in connection with Figure 3 above is used for controlling pump, change over valve and heater element.

The proposed method creates a first nondimensional variable termed a relative drive current $I_{rel}$ . The relative drive current $I_{rel}$ is calculated using a current drive current $I(n)$ for a current sample n, a minimum drive current $I_{min}$ and a reference drive current $I_{ref}$.

$$(2) \qquad I_{rel}(n) = \frac{I(n) - I_{min}}{I_{ref} - I_{min}}$$

The method also creates a second nondimensional variable based on the ratio between an integrated relative drive current area $A_1$ and an ideal area $A_2$, which is the integrated area under the straight line between start and current value of the relative drive current. These areas are illustrated in Figure 4.

Figure 4 shows a diagram in which drive current is plotted over time for n number of samples. The diagram indicates a first and a second area $A_1$, $A_2$, where an integrated relative drive current area $A_{int}$ is defined as:

$$(3) \qquad A_{int} = A_1 + A_2$$

and an ideal area $A_{ideal}$ is defined as:

$$(4) \qquad A_{ideal} = A_2$$

A non-dimensional ratio $A_k$ is calculated continuously for each sample n during the relative drive current $I_{rel}$ increase. $A_k$ is defined by following equation:

$$(5) \qquad A_k = \frac{A_1}{A_2} = \frac{A_{int}}{A_{ideal}} - 1 = \frac{2\sum_{k=1}^{n} I_{rel}(k)}{n * I_{rel}(n)} - 1$$

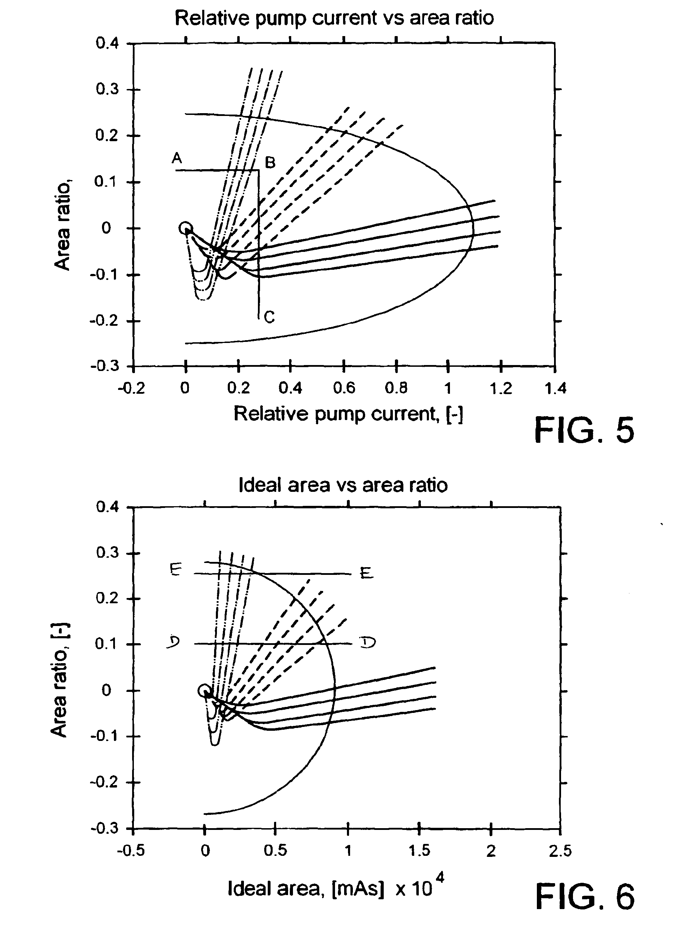

A number of measurements, for different fuel levels, different types of fuel and during various ambient atmospheric conditions have been analysed. The non-dimensional area ratio $A_k$ as function of the relative drive current $I_{rel}$ gives the graphs plotted in Figure 5.

Figure 5 shows the results from a simulation using said measurements to calculate the area ratio $A_k$ and the relative drive current $I_{rel}$, which values are plotted versus each other. Curves indicated by solid lines correlates to a tank having no leakage, curves indicated by dashed lines to a 0,5 mm leakage and curves indicated by dash-dotted lines to a 1,0 mm leakage.

All plotted sequences starts in the origin, indicated by a circle, and ends with a cross, which corresponds to the point of time when a predetermined set of conditions were fulfilled. The half ellipse indicated in the figure is a proposed boundary for judgement condition, that is, when a curve crosses the line of the ellipse the function is able determine the size of the possible leakage. The ellipse is defined by

$$(6) \qquad \frac{x^2}{a^2} + \frac{y^2}{b^2} = 1$$

where 2a and 2b are the major and minor axis of the ellipse.

The curves in Figure 5 illustrate previously collected data representing a number of different atmospheric conditions and different liquid levels. The data has been calculated for a predetermined number of samples, instead of using predetermined limit conditions. The resulting curves have then been used to determine suitable boundary conditions for subsequent diagnostics tests.

During an actual diagnostics test it is of course possible that a predetermined condition is not fulfilled, even after a large number of samples. This may in itself be taken as an indication that a leak is present. However, after a preset time limit a further check can be performed. If the value of the area ratio $A_k$ exceeds a predetermined value at the said time limit, then this indicates that a leak is present. To distinguish between a leakage equal to larger than 1,0 mm and a smaller leakage can for example be done by specifying a first boundary line (see line AB in Figure 5). This boundary line should be crossed if a rough leakage larger than 1,0 mm exists. In order to avoid indication of a fault for rough leakage a second boundary line indicating a predetermined relative drive current value (see line BC in Figure 5) should be crossed within a certain time limit. In addition, the area ratio $A_k$ can be correlated with the relative drive current $I_{rel}$ to determine the size of the leak.

There is also a similar dependence between the area ratio $A_k$ and the ideal area $A_{ideal}$.

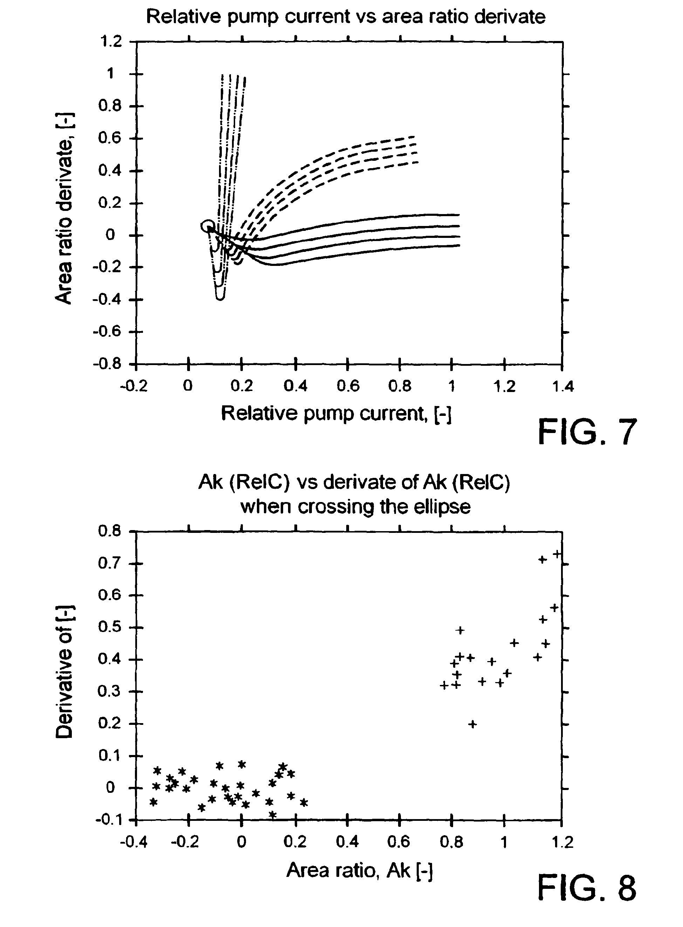

The diagram in Figure 6 shows the results from a simulation using said measurements to calculate the area ratio $A_k$ and the ideal area $A_{ideal}$, which values are plotted versus each other. Curves indicated by solid lines correlates to a tank having no leakage, curves indicated by dashed lines to a 0,5 mm leakage and curves indicated by dash-dotted lines to a 1,0 mm leakage. In this case the half circle indicated in the figure is a proposed boundary for judgement condition, that is, when a curve crosses the line of the circle the function is able determine the size of the possible leakage.

As in the case of Figure 5, it is also possible to distinguish between a leakage equal to larger than 1,0 mm and a smaller leakage, for example by specifying boundary lines (see lines DD and EE in Figure 6). A first boundary line DD should be crossed if a leakage exists, and a further boundary line EE should be crossed if a leakage larger than 1,0 mm exists. Each boundary line should be crossed within a predetermined time limit.

Similarly a further check can be performed upon the expiry of a pre-set time limit. If the value of the area ratio $A_k$ exceeds a predetermined value at the said time limit, then this indicates that a leak is present. Alternatively, the area ratio can be correlated with the ideal area $A_{ideal}$ to determine the size of the leak.

An analysis of the derivative of the area ratio $A_k$ with respect to relative drive current $I_{rel}$, as defined by

$$(7) \qquad A'_k (I_{rel}) = \frac{\partial A_k}{\partial I_{rel}}$$

also gives an evident dependency, i.e. the derivative of the curves in figure 5. As the derivative yields a lot of noise if calculated for each sample, the derivative is preferably calculated when the relative drive current has increased a certain value since last time the derivative was calculated. Also, a low pass filter can be used to decrease the noise.

The diagram in Figure 7 shows the derivative of the area ratio with respect to relative drive current calculated from the values used in Figure 5. As in the above examples, curves indicated by solid lines correlates to a tank having no leakage, curves indicated by dashed lines to a 0,5 mm leakage and curves indicated by dash-dotted lines to a 1,0 mm leakage.

For the detection mechanism according to the invention it is desirable to distinguish between a non-leakage and a 0,5 mm leakage condition. Therefore an additional examination can be performed in order to minimise the dispersion and maximise the distance between values representing non-leakage and 0,5 mm leakage respectively.

The following text describes a proposed definition of a test value, which can be used in order to determine whether there is a small leakage or not. When the curve crosses the ellipse indicated in Figure 5, the current area ratio $A_k$ and the current derivative of the area ratio $A'_k$ with respect to relative drive current $I_{rel}$ are used in linear combination to create a test value:

$$(8) \qquad \text{Testvalue} = aA_k + bA'_{kLP}(I_{rel})$$

where $A'_{kLP}$ represents a low pass filtered value of $A'_k$

The values of area ratio and the current derivative of the area ratio when crossing the ellipse of Figure 5 are plotted in the diagram shown in Figure 8. The values plotted near the origin (values indicated by "*") arise from a non-leakage condition and the values plotted in the upper right corner (indicated by "+") of the diagram arise from 0,5 mm leakage.

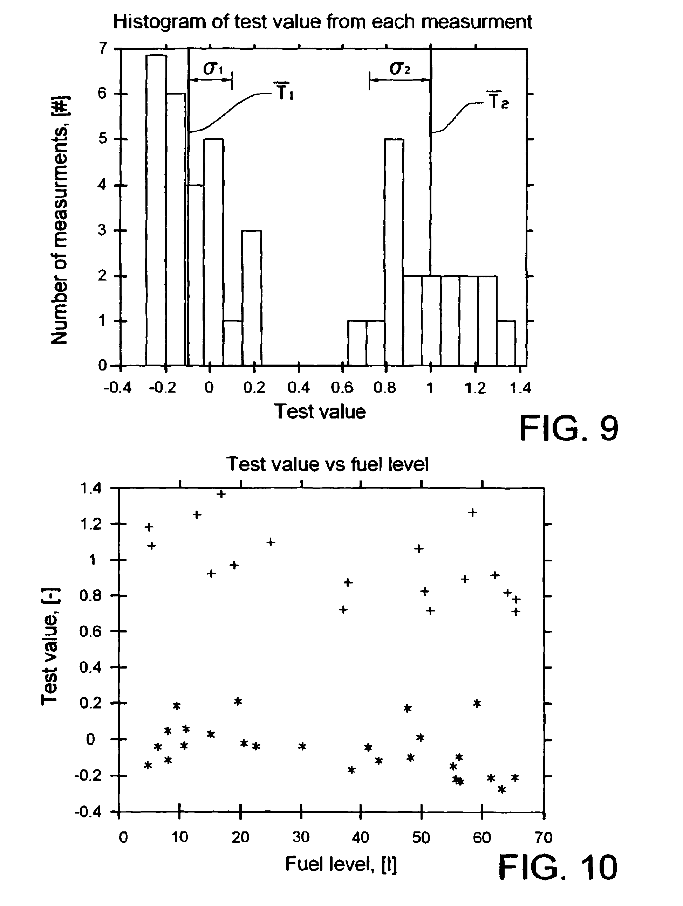

Figure 9 shows a histogram for the test value T calculated from Figure 8 above. According to this example, the average test value $\overline{T_1}$ and standard deviation $\sigma_1$ for non-leakage is -0,09 and 0, 15 respectively. For a 0,5 mm leakage the average test value $\overline{T_2}$ and standard deviation $\sigma_2$ are 0,99 and 0,20 respectively.

As stated above this evaluation algorithm is fuel level independent. This can be verified by plotting the test value versus the actual fuel level. The graph plotted in Figure 10 shows the independence of fuel level. The test values from a nonleakage condition (values indicated by "*") and a 0,5 mm leakage (indicated by "+") are both clearly independent of the fuel level.

The following is a summary of a proposed discrete algorithm to distinguish between a non-leakage and a 0,5 mm leakage. A reference current value and a minimum drive current value are required for this algorithm to start.

To distinguish between a leakage equal to larger than 1,0 mm and a smaller leakage can for example be done by specifying a first boundary line (see line AB in Figure 5). This boundary line should be crossed if a rough leakage larger than 1,0 mm exists. In order to avoid indication of a fault for rough leakage a second boundary line indicating a predetermined relative drive current value (see line BC in Figure 5) should be crossed within a certain time limit.

The evaluation algorithm represented by the pseudo code in the following example may be used to determine if there is a 0,5 mm leakage, a 1,0 mm leakage or no leakage.

## Diagnosis evaluation algorithm

*i = 1; n = 1; Judgement done =0; No_rough_leak_found = 0*

*Loop until Judgement_done = 1*

$$I_{rel}(n) = \frac{I(n) - I_{min}}{I_{ref} - I_{min}}$$

$$A_{int}(n) = A_{int}(n-1) + I_{rel}(n)$$

$$A_k(n) = \frac{2A_{int}(n)}{n * I_{rel}(n)} - 1$$

*If* $I_{rel}(n) - I_{rel}(i) > C_{\Delta Irel}$ *then*

$$A'_k(I_{rel}) = \frac{\partial A_k}{\partial I_{rel}} = \frac{A_k(n) - A_k(i)}{I_{rel}(n) - I_{rel}(i)}$$

$$A'_{kLP} = C_{LP}A'_{kLP} + (1 - C_{LP})A'_k$$

*i= n*

*End if*

*If No_rough_leak_found = 0*

*If* $\left(A_k(n) > C_{AB} \ \& \ I_{rel}(n) < C_{BC} \ \& \ n < C_{time}\right)$ *or*

$$\left(A_k(n) \leq C_{AB} \ \& \ I_{rel}(n) < C_{BC} \ \& \ n \geq C_{time}\right)$$

**Leakage ≥ 1,0 mm found**

*Judgement_done = 1*

*Else if* $\left(I_{rel}(n) \geq C_{BC}\right)$

**No leakage ≥ 1,0 mm found**

*No_rough_leak_found = 1*

*End if*

*End if*

$$\text{If} \quad \left(\frac{I_{rel}(n)}{C_{Irel}}\right)^2 + \left(\frac{A_k(n)}{C_{Ak}}\right) > 1 \quad then$$

*Testvalue =$C_a A_k$ + $C_b A'_{kLP}$*

*If Testvalue > $C_{faultlimit}$*

**Leakage $\geq$ 0,5 mm found**

*Else*

**No leakage $\geq$ 0,5 mm found**

*End*

*Judgement_done = 1*

*End if*

*n = n + I*

*End loop*

| Variable, flag and constant explanations | |
|---|---|
| **Variable** | **Explanation** |
| $A_{int}$ | Integrated area, or the accumulated relative drive current. |
| $A_k$ | The area ratio. |
| $A'_k$ | Derivative of $A_k$ |
| $A'_{kLP}$ | Low pass filtered $A'_k$ |
| I | Drive current, input to the algorithm, (low pass filtered) |
| $I_{min}$ | Minimum drive current value, directly after COV switching. |
| $I_{ref}$ | Reference pumps current, just before COV switching. |
| $I_{rel}$ | Relative drive current based on I , $I_{min}$ and $I_{ref}$ |
| n | The actual sample. This integer increments each iteration in the loop. |
| **Flag** | **Explanation** |
| Judgement _ done | Flag, which implies if a judgement has been done or not. When a judgement a done the sequence is ended. |
| No_rough_ leak_found | Flag, which is set to one when no rough leak is found. There could still be a small leak. |

(continued)

| Flag | Explanation |
|---|---|
| Testvalue,T | The test value variable used for small leak judgement. |
| **Constant** | **Explanation** |
| $C_a$ | Weight factor constant for $A_k$ . |
| $C_{AB}$ | The maximum area ratio, admitted to no set fault for leakage > = 1. 0 mm, when relative drive current is bellow $C_{BC}$ and time is bellow $C_{time}$ |
| $C_{Ak}$ | The area ratio value $A_k$ where the ellipse intercepts with the area ratio axis. |
| $C_b$ | Weight factor constant for $A'_{kLP}$ |
| $C_{BC}$ | The maximum relative drive current to set rough leak fault within $C_{time}$ |
| $C_{\Delta Irel}$ | The required relative drive current delta to calculate a new $A'_{kLP}$ |
| $C_{fault\ limit}$ | The fault limit, measured to separate a small leakage from no leakage. |
| $C_{Irel}$ | The relative drive current $I_{rel}$ value where the ellipse intercept with the relative drive current axis. |
| $C_{time}$ | Maximum admitted time for relative drive current to be smaller then $C_{AB}$ and for area ratio to be smaller then $C_{BC}$ |

The invention is not limited to the above embodiments, but may be varied freely within the scope of the appended claims.

**Claims**

1. Method for diagnosing a leakage in a vessel (6) which vessel is provided with an electric pump (1,2) for pressurising the vessel, a sensor (3) for measuring a drive current used for driving the pump and generating a current signal, an electronic control unit (9) for sampling, storing and analysing said drive current signal, the method involves the following steps:

   - measuring a reference drive current ($I_{ref}$) for a known operating condition;
   - pressurising the vessel and sampling the drive current (I(n)) until at least one predetermined condition is fulfilled;

   **characterised in** the steps:

   - determining an area ratio ($A_k$) based on integrated values ($A_1$) of the actual drive current (I(n)) used in excess of an ideal drive- current ($I_{ideal}$) and the ideal drive current ($I_{Ideal}$) using a minimum ($I_{min}$) and the actual (I(n)) drive current sample, where the area ratio is calculated according to the formula

$$A_k = \frac{2\sum_{k=1}^{n} I_{rel}(k)}{n * I_{rel}(n)} - 1$$

   where a non-dimensional, relative drive current ($I_{rel}$) is calculated according to the formula

$$I_{rel}(n) = \frac{I(n) - I_{min}}{I_{ref} - I_{min}}$$

with the actual drive current (I(n)) for a current sample (n), the minimum drive current ($I_{min}$) and the reference drive current ($I_{ref}$); and

- comparing at least the area ratio ($A_k$) as a function of a further parameter with a reference level, when at least one predetermined condition is fulfilled, to determine if a leakage is present.

2. Method according to claim 1, **characterized in** by deeming that one predetermined condition is fulfilled when a plotted function of the area ratio over the relative drive current reaches a predetermined boundary limit.

3. Method according to claim 1, **characterized in** by deeming that one predetermined condition is fulfilled when the area ratio exceeds a pre-set value.

4. Method according to claim 1, **characterized in** by deeming that one predetermined condition is fulfilled when a pre-set time period is exceeded.

5. Method according to claim 1, **characterized in** a further step of comparing a function of the area ratio ($A_k$) with a map stored in the electronic control unit to determine if a leakage is present.

6. Method according to claim 5, **characterized in** a further step of comparing the area ratio ($A_k$) plotted as a function of the relative drive current ($I_{rel}$) with a map stored in the electronic control unit to determine if a leakage is present.

7. Method according to claim 5, **characterized in** a further step of comparing a derivative of the area ratio ($\delta A_k/\delta I_{rel}$) plotted as a function of the relative drive current ($I_{rel}$) with a map stored in the electronic control unit to determine if a leakage is present.

8. Method according to claim 5, **characterized in** a further step of comparing the area ratio ($A_k$) plotted as a function of an ideal area ($A_{ideal}$) with a map stored in the electronic control unit to determine if a leakage is present.

9. Method according to claim 5, characterized i n a further step of comparing a derivative of the area ratio ($\delta A_k/\delta I_{rel}$) plotted as a function of the area ratio ($A_k$) with a map stored in the electronic control unit to determine if a leakage is present.

10. Leakage diagnosis apparatus for determining a leakage in a vessel (6), which vessel is provided with an electric pump (1,2) for pressurising the vessel, a sensor (3) for measuring a drive current used for driving the pump and generating a current signal, an electronic control unit (9) for sampling, storing and analysing said drive current signal, the apparatus further comprises:

- means for measuring a reference drive current ($I_{ref}$) of the electric pump when air is pumped by said electric pump via a reference orifice (5) having a reference aperture diameter, and
- means for diagnosing the presence of a vapour leakage by sampling a minimum ($I_{min}$) and subsequent values (I(k)) for the drive current of said electric pump when air is pumped by said electric pump bypassing said reference orifice into the vessel to be leak diagnosed;

**characterised in :**

- means for calculating a relative drive current ($I_{rel}$), using the sampled actual drive current (I(n)), the reference drive current ($I_{ref}$) and the minimum drive current ($I_{min}$) according to the formula

$$I_{rel}(n) = \frac{I(n) - I_{min}}{I_{ref} - I_{min}}$$

- means for calculating an area ratio ($A_k$), as a ratio of an integrated value ($A_{int}$) of the relative drive current ($I_{rel}$) for a predetermined number of samples $(n)_\emptyset$ over an integrated value ($A_{ideal}$) of an ideal drive current ($I_{Ideal}$) using the minimum ($I_{min}$) actual (I(m)) drive current samples, according to the formula

$$A_k = \frac{2\sum_{k=1}^{n} I_{rel}(k)}{n * I_{rel}(n)} - 1$$

- means for comparing at least the area ratio ($A_k$) with a reference level when at least one predetermined condition is fulfilled, to determine if a leakage is present.

**Patentansprüche**

1. Verfahren zur Leckdiagnose in einem Behälter (6), wobei der Behälter eine elektrische Pumpe (1, 2) zum Druckbeaufschlagen des Behälters, einen Sensor (3) zum Messen eines Antriebsstroms, der zum Antreiben der Pumpe und zum Erzeugen eines Stromsignals verwendet wird, und eine elektronische Steuereinheit (9) zum Abfragen, Speichern und Analysieren des Antriebsstromsignals aufweist, mit folgenden Verfahrensschritten:

   - Messen eines Bezugsantriebsstroms ($I_{ref}$) für einen bekannten Betriebszustand;
   - Druckbeaufschlagen des Behälters und Abfragen des Antriebsstroms ($I(n)$) bis zumindest ein vorbestimmter Zustand erreicht ist; **gekennzeichnet durch** die Schritte:
   - Bestimmen eines Flächenverhältnisses ($A_k$), das auf integrierten Werten ($A_1$) des effektiven Antriebsstroms ($I(n)$), der über einen idealen Antriebstromes ($I_{ideal}$) hinaus geht, und des idealen Antriebsstroms ($I_{ideal}$), der ein Minimum ($I_{min}$) und den effektiven ($I(n)$) Antriebstrom verwendet, basiert, wobei das Flächenverhältnis gemäß der Formel

$$A_k = \frac{2\sum_{k=1}^{n} I_{rel}(k)}{n * I_{rel}(n)} - 1$$

   berechnet wird, wobei ein dimensionsloser, relativer Antriebsstrom ($I_{rel}$) gemäß der Formel

$$I_{rel}(n) = \frac{I(n) - I_{min}}{I_{ref} - I_{min}}$$

   berechnet wird, mit dem effektiven Antriebsstrom ($I(n)$) für eine aktuelle Abtastung ($n$), dem Minimalantriebs-strom ($I_{min}$) und dem Bezugsantriebsstrom ($I_{ref}$); und
   - Vergleichen zumindest des Flächenverhältnisses ($A_k$) als eine Funktion eines weiteren Parameters mit einem Bezugsniveau, wenn zumindest ein vorbestimmter Zustand erreicht ist, um das Vorhandensein eines Lecks zu erfassen.

2. Verfahren nach Anspruch 1, **dadurch gekennzeichnet, dass** entschieden wird, dass ein vorbestimmter Zustand erreicht ist, wenn eine über dem relativen Antriebsstrom aufgetragene Funktion des Flächenverhältnisses einen vorbestimmten Grenzwert erreicht.

3. Verfahren nach Anspruch 1, **dadurch gekennzeichnet, dass** entschieden wird, dass ein vorbestimmter Zustand erreicht ist, wenn das Flächenverhältnis einen voreingestellten Wert übersteigt.

4. Verfahren nach Anspruch 1, **dadurch gekennzeichnet, dass** entschieden wird, dass ein vorbestimmter Zustand erreicht ist, wenn eine voreingestellte Zeitdauer überschritten wird.

5. Verfahren nach Anspruch 1, **gekennzeichnet durch** einen weiteren Schritt des Vergleichens einer Funktion des Flächenverhältnisses ($A_k$) mit einem Kennfeld, welches in der elektronischen Steuereinheit gespeichert ist, um das Vorhandensein eines Lecks zu erfassen.

6. Verfahren nach Anspruch 5, **gekennzeichnet durch** einen weiteren Schritt des Vergleichens einer Funktion des Flächenverhältnisses ($A_k$), dargestellt als eine Funktion des relativen Antriebstroms ($I_{rel}$), mit einem Kennfeld, welches in der elektronischen Steuereinheit gespeichert ist, um das Vorhandensein eines Lecks zu erfassen.

7. Verfahren nach Anspruch 5, **gekennzeichnet durch** einen weiteren Schritt des Vergleichens einer Ableitung des Flächenverhältnisses ($\delta A_k / \delta I_{rel}$), dargestellt als eine Funktion des relativen Antriebstroms ($I_{rel}$), mit einem Kennfeld, welches in der elektronischen Steuereinheit gespeichert ist, um das Vorhandensein eines Lecks zu erfassen.

8. Verfahren nach Anspruch 5, **gekennzeichnet durch** einen weiteren Schritt des Vergleichens eines Flächenverhältnisses ($A_k$), dargestellt als eine Funktion einer idealen Fläche ($A_{ideal}$), mit einem Kennfeld, welches in der elektronischen Steuereinheit gespeichert ist, um das Vorhandensein eines Lecks zu erfassen.

9. Verfahren nach Anspruch 5, **gekennzeichnet durch** einen weiteren Schritt des Vergleichens einer Ableitung des Flächenverhältnisses ($\delta A_k / \delta I_{rel}$), dargestellt als eine Funktion des Flächenverhältnisses ($A_k$), mit einem Kennfeld, welches in der elektronischen Steuereinheit gespeichert ist, um das Vorhandensein eines Lecks zu erfassen.

10. Leckdiagnosevorrichtung zum Erfassen eines Lecks in einem Behälter (6), wobei der Behälter eine elektrische Pumpe (1, 2) zum Druckbeaufschlagen des Behälters, einen Sensor (3) zum Messen eines Antriebsstroms, der einem Antreiben der Pumpe und einem Erzeugen eines Stromsignals dient, und eine elektronische Steuereinheit (5) zum Abfragen, Speichern und Analysieren des Antriebstromsignals aufweist, wobei die Vorrichtung des Weiteren beinhaltet:

   - Mittel zum Messen eines Bezugsantriebsstroms ($I_{ref}$) der elektrischen Pumpe, wenn Luft mittels der elektrischen Pumpe durch eine Bezugsöffnung, welche einen Bezugsöffnungsdurchmesser besitzt, gepumpt wird; und
   - Mittel zum Diagnostizieren des Vorhandenseins eines Flüssigkeitslecks durch Abfragen eines Minimums ($I_{min}$) und nachfolgender Werte ($I(k)$) für den Antriebsstrom der elektrischen Pumpe, wenn Luft mittels der elektrischen Pumpe durch die Bezugsöffnung in den Behälter, der einer Leckdiagnose unterzogen werden soll, gepumpt wird; **gekennzeichnet durch**
   - Mittel zum Berechnen eines relativen Antriebsstroms ($I_{rel}$), unter Verwendung des abgefragten, effektiven Antriebsstroms ($I(n)$), des Bezugsantriebsstromes ($I_{ref}$) und des Minimalantriebsstromes ($I_{min}$) gemäß der Formel

$$I_{rel}(n) = \frac{I(n) - I_{min}}{I_{ref} - I_{min}}$$

   - Mittel zum Berechnen eines Flächenverhältnisses ($A_k$) als ein Verhältnis eines integrierten Wertes ($A_{int}$) des relativen Antriebsstroms ($I_{rel}$) für eine vorbestimmte Anzahl von Abtastungen (n) über einen integrierten Wert ($A_{ideal}$) eines idealen Antriebsstroms ($I_{ideal}$), welcher das Minimum ($I_{min}$) und die effektive ($I(n)$) Antriebsstromabtastung verwendet, gemäß der Formel

$$A_k = \frac{2\sum_{k=1}^{n} I_{rel}(k)}{n * I_{rel}(n)} - 1$$

   - Mittel zum Vergleichen zumindest des Flächenverhältnisses ($A_k$) mit einem Bezugsniveau, wenn zumindest ein vorbestimmter Zustand erreicht ist, um das Vorhandensein eines Lecks zu erfassen.

**Revendications**

1. Procédé pour diagnostiquer une fuite dans un récipient (6), lequel récipient est muni d'une pompe électrique (1,2) pour mettre sous pression le récipient, d'un capteur (3) pour mesurer un courant d'attaque utilisé pour entraîner la pompe et produire un signal de courant, d'une unité de commande électronique (9) pour échantillonner, mémoriser et analyser ledit signal de courant d'attaque, le procédé implique les étapes suivantes consistant à :

   - mesurer un courant d'attaque de référence ($I_{ref}$) pour une condition de fonctionnement connue,
   - mettre sous pression le récipient et échantillonner le courant d'attaque ($I(n)$) jusqu'à ce qu'au moins une condition prédéterminée soit remplie,

   **caractérisé par** les étapes consistant à:

   déterminer un rapport de surface ($A_k$) basé sur les valeurs intégrées ($A_1$) du courant d'attaque réel ($I(n)$) utilisé au-dessus d'un courant d'attaque idéal ($I_{ideal}$) et le courant d'attaque idéal ($I_{ideal}$) en utilisant un échantillon de courant d'attaque minimum ($I_{min}$) et réel ($I(n)$), où le rapport de surface est calculé selon la formule

$$A_k = \frac{2\sum_{k=1}^{n} I_{rel}(k)}{n * I_{rel}(n)} - 1$$

   dans laquelle un courant d'attaque relatif non dimensionnel ($I_{rel}$) est calculé selon la formule

$$I_{rel}(n) = \frac{I(n) - I_{min}}{I_{ref} - I_{min}}$$

   avec le courant d'attaque réel ($I(n)$) pour un échantillon de courant ($n$), le courant d'attaque minimum ($I_{min}$) et le courant d'attaque de référence ($I_{ref}$), et

   - comparer au moins le rapport de surface ($A_k$) en fonction d'un paramètre supplémentaire avec un niveau de référence, quand au moins une condition prédéterminée est remplie, pour déterminer si une fuite est présente.

2. Procédé selon la revendication 1, **caractérisé en** supposant qu'une condition prédéterminée est remplie quand une fonction tracée du rapport de surface sur le courant d'attaque relatif atteint une limite de seuil prédéterminée.

3. Procédé selon la revendication 1, **caractérisé en** supposant qu'une condition prédéterminée est remplie quand le rapport de surface dépasse une valeur préétablie.

4. Procédé selon la revendication 1, **caractérisé en** supposant qu'une condition prédéterminée est remplie quand une période de temps préétablie est dépassée.

5. Procédé selon la revendication 1, **caractérisé par** une étape supplémentaire consistant à comparer une fonction du rapport de surface ($A_k$) à une carte mémorisée dans l'unité de commande électronique pour déterminer si une fuite est présente.

6. Procédé selon la revendication 5, **caractérisé par** une étape supplémentaire consistant à comparer le rapport de surface ($A_k$) tracé en fonction du courant d'attaque relatif ($I_{rel}$) à une carte mémorisée dans l'unité de commande électronique pour déterminer si une fuite est présente.

7. Procédé selon la revendication 5, **caractérisé par** une étape supplémentaire consistant à comparer une dérivée du rapport de surface $(\delta A_k/\delta I_{rel})$ tracé en fonction du courant d'attaque relatif ($I_{rel}$) à une carte mémorisée dans l'unité de commande électronique pour déterminer si une fuite est présente.

8. Procédé selon la revendication 5, **caractérisé par** une étape supplémentaire consistant à comparer le rapport de surface ($A_k$) tracé en fonction d'une surface idéale ($A_{ideal}$) à une carte mémorisée dans l'unité de commande électronique pour déterminer si une fuite est présente.

9. Procédé selon la revendication 5, **caractérisé par** une étape supplémentaire consistant à comparer une dérivée du rapport de surface $(\delta A_k/\delta I_{rel})$ tracé en fonction du rapport de surface ($A_k$) à une carte mémorisée dans l'unité de commande électronique pour déterminer si une fuite est présente.

10. Dispositif de diagnostic de fuite pour déterminer une fuite dans un récipient (6), lequel récipient est muni d'une pompe électrique (1.2) pour mettre sous pression le récipient, d'un capteur (3) pour mesurer un courant d'attaque utilisé pour entraîner la pompe et produire un signal de courant, d'une unité de commande électronique (9) pour échantillonner, mémoriser et analyser ledit signal de courant d'attaque, le dispositif comportant de plus :

- des moyens pour mesurer un courant d'attaque de référence ($I_{ref}$) de la pompe électrique quand de l'air est pompé par ladite pompe électrique via un orifice de référence (5) ayant un diamètre d'ouverture de référence, et
- des moyens pour diagnostiquer la présence d'une fuite de vapeur en échantillonnant un minimum ($I_{min}$) et des valeurs consécutives (I(k)) pour le courant d'attaque de ladite pompe électrique quand de l'air est pompé par ladite pompe électrique contournant ledit orifice de référence dans le récipient où une fuite doit être diagnostiquée,

**caractérisé par**

- des moyens pour calculer un courant d'attaque relatif ($I_{rel}$), en utilisant le courant d'attaque réel échantillonné (I(n)), le courant d'attaque de référence ($I_{ref}$) et le courant d'attaque minimum ($I_{min}$), selon la formule

$$I_{rel}(n) = \frac{I(n) - I_{min}}{I_{ref} - I_{min}}$$

- des moyens pour calculer un rapport de surface ($A_k$), en tant que rapport d'une valeur intégrée ($A_{int}$) du courant d'attaque relatif ($I_{rel}$) pour un nombre prédéterminé d'échantillons (n) sur une valeur intégrée ($A_{ideal}$) d'un courant d'attaque idéal employant les échantillons de courant d'attaque minimum ($I_{min}$) et réel (I(n)), selon la formule

$$A_k = \frac{2\sum_{k=I}^{n} I_{rel}(k)}{n * I_{rel}(n)} - 1$$

- des moyens pour comparer au moins le rapport de surface ($A_k$) à un niveau de référence quand au moins une condition prédéterminée est remplie, pour déterminer si une fuite est présente.

FIG. 1

FIG. 2A

FIG. 2B

FIG. 3

FIG. 4

Relative pump current vs area ratio

FIG. 5

Ideal area vs area ratio

FIG. 6

Relative pump current vs area ratio derivate

FIG. 7

Ak (RelC) vs derivate of Ak (RelC)
when crossing the ellipse

FIG. 8

Histogram of test value from each measurment

FIG. 9

Test value vs fuel level

FIG. 10